# FASCICULE DE BREVET EUROPEEN

(11) **EP 3 393 392 B1**
(45) Date de publication et mention de la délivrance du brevet: **18.09.2019**
(21) Numéro de dépôt: 17717797.9
(22) Date de dépôt: 30.03.2017
(51) Int. Cl.: A61C 1/08

(54) **DISPOSITIF D'AIDE À LA MISE EN PLACE D'IMPLANTS DENTAIRES ET PROCÉDÉ DE FABRICATION DUDIT DISPOSITIF**
VORRICHTUNG ZUR UNTERSTÜTZUNG BEI DER PLATZIERUNG VON ZAHNIMPLANTATEN UND VERFAHREN ZUR HERSTELLUNG DER BESAGTEN VORRICHTUNG
DEVICE FOR ASSISTING IN THE PLACING OF DENTAL IMPLANTS AND METHOD FOR PRODUCING SAID DEVICE

(30) Priorité: 30.03.2016 FR 1652749
(43) Date de publication de la demande: 31.10.2018
(73) Titulaire: One Ortho, 69230 Saint-Genis-Laval (FR)
(72) Inventeur: ALEPEE, Christophe, 69003 Lyon (FR); CASIMIRO, Roméo, 69230 Saint Genis Laval (FR)
(74) Mandataire: Cabinet Laurent & Charras
(86) Numéro de dépôt international: PCT/FR2017/050736
(87) Numéro de publication internationale: WO 2017/191378

(56) Documents cités:
- EP-A2- 2 060 240
- US-A1- 2011 111 362
- US-A1- 2013 071 811
- US-A1- 2015 265 373

## Description

### DOMAINE TECHNIQUE

La présente invention se rapporte au secteur technique de la chirurgie dentaire, et concerne plus particulièrement un dispositif d'aide à la mise en place d'implants dentaires, tels qu'un guide chirurgical pour le forage d'une mâchoire d'un patient pour l'implantation desdits implants.

L'invention concerne également un procédé de fabrication avantageux du dispositif selon l'invention.

### ETAT ANTERIEUR DE LA TECHNIQUE

Dans la chirurgie dentaire, lorsque la dentition d'un patient est fortement dégradée, il est connu de remplacer les dents abîmées ou manquantes par des prothèses sous la forme d'implants vissés dans la mâchoire du patient, à savoir dans le maxillaire supérieur ou inférieur.

Des techniques de chirurgie implantaire, guidées par ordinateur et couplées aux nouvelles méthodes d'imagerie médicales permettent au chirurgien de pré-planifier son opération chirurgicale aux moyens d'outils de planification 2D. Ces outils permettent notamment au chirurgien de positionner les forages à réaliser et de déterminer les axes de forage de la mâchoire du patient. Ces outils donnent lieu à la conception de guides chirurgicaux sur mesure pour le forage de la mâchoire du patient.

Les documents US2013/0071811 et US2011/0111362 divulguent des guides chirurgicaux pour le forage de la mâchoire du patient.

Un guide chirurgical de ce type consiste, par exemple, en une gouttière en résine réalisée sur mesure à partir de données 3D de la mâchoire du patient. La gouttière possède ainsi une forme anatomique complémentaire à celle de la mâchoire du patient, et est destinée à reposer sur des dents et/ou une portion de gencive dudit patient. Des orifices sont ménagés dans la gouttière, au niveau des endroits de la mâchoire où les implants doivent être vissés. Les orifices reçoivent des inserts cylindriques métalliques et permettent de guider un organe de forage de la mâchoire.

Ce type de guide chirurgical permet de faciliter et de guider des opérations de forage de la mâchoire du patient et selon un axe défini.

Cependant, lorsqu'il s'agit d'effectuer plusieurs forages successifs de la mâchoire, notamment avec des diamètres différents, le chirurgien utilise des dispositifs réducteurs de diamètres à insérer dans les orifices de la gouttière. En d'autres termes, le chirurgien dispose d'un dispositif réducteur pour chaque diamètre différent à réaliser. Le dispositif réducteur comprend une poignée au bout de laquelle est agencé un canon de guidage comprenant un diamètre externe ajusté au diamètre de l'orifice de la gouttière pour venir s'y insérer, et un diamètre interne adapté au forage à réaliser.

De ce qui précède, un inconvénient de ce type de guide chirurgical réside dans le fait qu'il présente un risque pour le chirurgien de se tromper dans l'utilisation des dispositifs réducteurs de diamètres, par exemple de les intervertir.

Un autre inconvénient réside dans l'encombrement du guide chirurgical. En effet, la superposition du guide chirurgical et des dispositifs réducteurs augmente l'encombrement total du système et gêne d'une part, le passage de l'organe de forage, et, d'autre part, le patient qui doit ouvrir d'autant plus la bouche.

Enfin, le chirurgien doit pouvoir contrôler les forages réalisés entre chaque opération de forage et tout au long de l'opération chirurgicale. Avec ce type de guide chirurgical, le chirurgien, même s'il est en mesure de retirer la gouttière entre chaque forage, a tendance à ne pas la retirer et à vérifier son forage qu'après avoir fini de réaliser tous les forages.

Plusieurs solutions ont été mises au point dans l'état de la technique pour pallier à quelques-uns des inconvénients relevés.

Par exemple, le document US 2010/0185201 décrit un guide chirurgical qui comprend des encoches latérales permettant d'insérer complètement les dispositifs réducteurs dans l'épaisseur de la gouttière, et d'y insérer notamment leur poignée pour diminuer l'encombrement total du système.

Cependant, ce type de guide ne fournit aucune solution permettant au chirurgien de diminuer les risques d'erreurs liés à l'utilisation de plusieurs dispositifs réducteurs, ni aucune solution pour le contrôle des forages effectués.

Le document US 2015/0265373 décrit un guide chirurgical et des dispositifs réducteurs de diamètres permettant le positionnement et le guidage d'un organe de forage. Ce document décrit des bouchons à insérer dans des orifices du guide chirurgical pour réduire le risque d'erreurs pendant l'utilisation des dispositifs réducteurs de diamètres.

Cependant, ce document ne répond pas à la problématique liée à l'encombrement du système, ni ne propose de solution pour le contrôle des forages effectués.

Enfin, le document CA 2 815 620 décrit un guide chirurgical mettant en oeuvre plusieurs moyens de guidage agencés à plusieurs hauteurs pour permettre un meilleur guidage du forage et pour permettre également le contrôle de la profondeur de forage.

Cependant, ce document ne répond pas à la problématique liée à l'encombrement du système.

### EXPOSE DE L'INVENTION

L'un des buts de l'invention est donc de remédier aux inconvénients précités en proposant un dispositif d'aide à la mise en place d'implants dentaires, conçu sur mesure pour un patient, qui permet de faciliter et de guider des opérations de forage d'une mâchoire d'un patient selon un axe défini, tout en présentant un encombrement minimum, en permettant d'éviter les risques d'erreurs de forage pour le chirurgien, et en permettant audit chirurgien de contrôler ses opérations de forage tout au long de l'opération chirurgicale.

Un autre objectif de l'invention est d'assurer une traçabilité des éléments constituant le dispositif selon l'invention jusqu'à l'opération chirurgicale sur le patient, tout évitant de perdre lesdits éléments ou de les mélanger avec ceux liés à un autre patient.

Un autre objectif de la présente invention vise à garantir un marquage plus lisible pour référencer et identifier les éléments constituant un dispositif selon l'invention, propres à un patient.

Un autre objectif de l'invention est d'assurer une stabilité optimale du dispositif selon l'invention, notamment lorsqu'il s'agit de traiter des patients complètement édentés.

A cet effet et selon l'invention, il a été mis au point un dispositif d'aide à la mise en place d'implants dentaires remarquable en ce qu'il comprend un jeu de gouttières, chaque gouttière est destinée à reposer directement ou indirectement sur au moins une dent et/ou au moins une portion de gencive dudit patient. Chaque gouttière comprend au moins un orifice de guidage d'un organe de forage. Les orifices comprennent des diamètres définis en fonction de l'opération chirurgicale à réaliser, et les orifices de mêmes diamètres sont tous ménagés sur une même gouttière de sorte qu'un diamètre de forage correspond à une gouttière particulière et de sorte que ledit jeu de gouttières comprend autant de gouttières que de diamètres de forage différents à réaliser lors de l'opération chirurgicale.

De cette manière, le dispositif selon l'invention permet de faciliter, pour le chirurgien, les opérations de forage de la mâchoire d'un patient nécessaires à l'implantation des implants. En effet, lors de l'implantation des implants, le chirurgien doit effectuer des opérations de forage la mâchoire en augmentant progressivement les diamètres de forage jusqu'à arriver au diamètre nécessaire à l'implantation de l'implant correspondant. Certains implants nécessitent de plus gros diamètres de forage que d'autres. Ainsi, pour chaque étape de forage, avec le dispositif selon l'invention, le chirurgien utilisera la gouttière correspondante du jeu de gouttières. Ainsi, lorsque le chirurgien doit réaliser des forages multiples avec des diamètres différents, les risques d'erreur sont diminués. En effet, le chirurgien n'utilise plus de dispositifs réducteurs de diamètres à superposer sur la gouttière et donc les risques d'erreur sont diminués. La gouttière utilisée lors d'une étape de forage comprend des orifices de guidage présentant des diamètres correspondant exactement aux diamètres de forage à réaliser lors de cette étape. A l'étape de forage suivante, le chirurgien utilise une nouvelle gouttière correspondante qui comprend des orifices de guidages adaptés à cette étape. En d'autres termes, les diamètres des orifices de guidage d'une gouttière utilisée à une étape de forage suivante sont soit augmentés en taille, soit obturés car le forage réalisé à l'étape précédente est suffisant pour l'implant correspondant.

De plus, étant donné que le chirurgien est contraint à changer de gouttière entre deux diamètres de forage différents, celui-ci est amené et incité à vérifier et à contrôler ses forages.

Enfin, une gouttière correspond à un diamètre de forage particulier de sorte que l'encombrement du dispositif est toujours le même, il n'y a pas de dispositif réducteurs à superposer. L'encombrement du dispositif selon l'invention est minimum ce qui évite toute gêne pour le chirurgien et le patient.

Selon une forme de réalisation particulière avantageuse pour l'opération d'un patient partiellement édenté, chaque gouttière présente une forme anatomique complémentaire à celle de la mâchoire du patient de sorte à pouvoir reposer directement sur au moins une dent et/ou au moins une portion de gencive dudit patient.

Selon une autre forme de réalisation avantageuse pour l'opération d'un patient complètement édenté, le dispositif comprend un organe support destiné à être fixé sur la gencive du patient, et chaque gouttière comprend une forme complémentaire à celle de l'organe support pour pouvoir reposer sur celui-ci. L'organe support et les gouttières comprennent des moyens de fixation complémentaires.

Avantageusement, les gouttières sont réalisées en matière plastique de sorte que le dispositif selon l'invention est peu onéreux à usage unique et jetable. Lorsque le dispositif comprend un organe support, ce dernier peut également être réalisé en plastique pour les mêmes avantages.

Selon une forme de réalisation particulière, les gouttières sont reliées entre elles par au moins une patte de liaison sécable de manière à ce que le jeu de gouttières se présente sous la forme d'une grappe de gouttières. Lorsque le dispositif comprend un organe support, ce dernier est également relié au jeu de gouttières par au moins une patte de liaison sécable.

De cette manière, les risques de perdre une gouttière ou un organe support, ou de les mélanger avec ceux d'un autre patient sont diminués.

De préférence, les gouttières présentées en grappes sont notamment reliées entre elles dans l'ordre chronologique dans lequel elles doivent être utilisées au cours de l'opération chirurgicale ce qui facilite l'opération du chirurgien et diminue les risques d'erreurs. Encore plus avantageusement, chaque gouttière comprend un numéro correspondant à son ordre d'utilisation lors de l'opération chirurgicale.

Avantageusement, et afin d'assurer la traçabilité des éléments constituant le dispositif selon l'invention jusqu'à l'opération chirurgicale sur le patient, et d'éviter de mélanger lesdits éléments avec ceux liés à un autre patient, la ou les pattes de liaison sont planes et pourvues d'une inscription identifiant l'ordre d'utilisation des gouttières lors de l'opération chirurgicale et/ou le patient auquel le dispositif selon l'invention est adapté.

Le caractère sécable des pattes de liaison est conféré par toute technique appropriée, telle qu'une épaisseur relativement fine desdites pattes, ou bien lesdites pattes présentent une zone fragilisée avec une extrémité en pointe.

L'invention concerne également un procédé de fabrication du dispositif d'aide à la mise en place d'implants dentaires selon l'invention, remarquable en ce qu'il consiste à fabriquer, en même temps et par fabrication additive couche par couche, les gouttières constitutives du jeu de gouttières ainsi que les pattes de liaison, liées de manière sécable auxdites gouttières, et reliant entre elles lesdites gouttières.

Lorsque le dispositif selon l'invention comprend un organe support, celui-ci est fabriqué en même temps que les gouttières et par fabrication additive couche par couche.

Après fabrication, les gouttières et l'organe support sont traités et nettoyés ensemble, avec leurs pattes de liaison. Ce n'est que lors de l'opération chirurgicale que les pattes, dont la liaison avec les gouttières et l'organe support est sécable, sont cassées par le chirurgien pour détacher l'organe support et une à une les gouttières, notamment celle correspondant au diamètre de forage qu'il envisage de réaliser.

### BREVE DESCRIPTION DES DESSINS

D'autres caractéristiques et avantages de l'invention ressortiront clairement de la description qui en est réalisée ci-après, à titre indicatif et nullement limitatif, en référence aux figures annexées dans lesquelles :

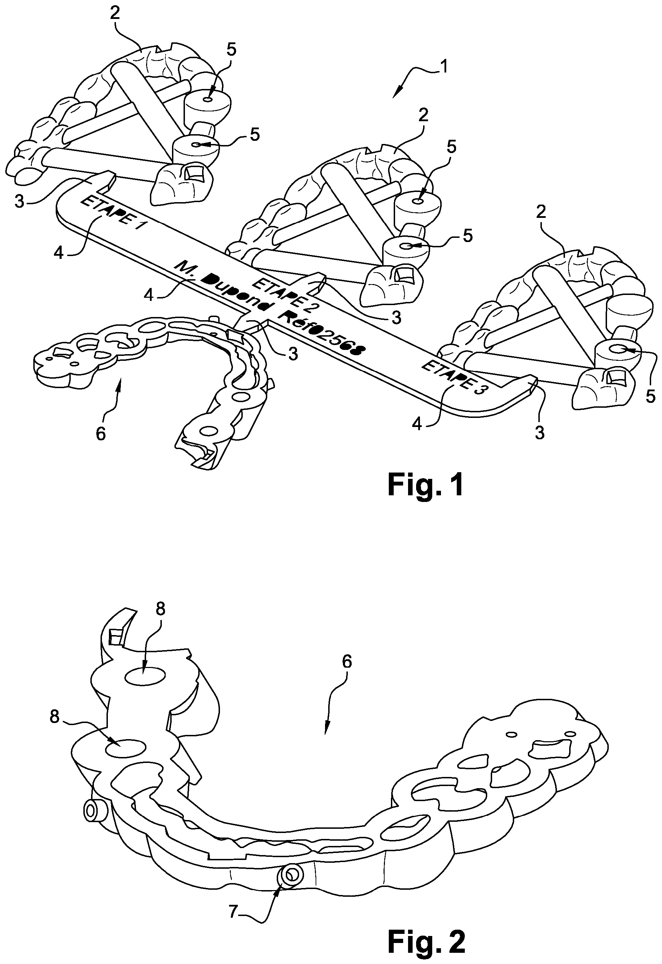

- la figure 1 illustre en perspective le dispositif selon l'invention avec des gouttières et un organe support présentés en grappe ;
- la figure 2 illustre en perspective un organe support selon l'invention ;

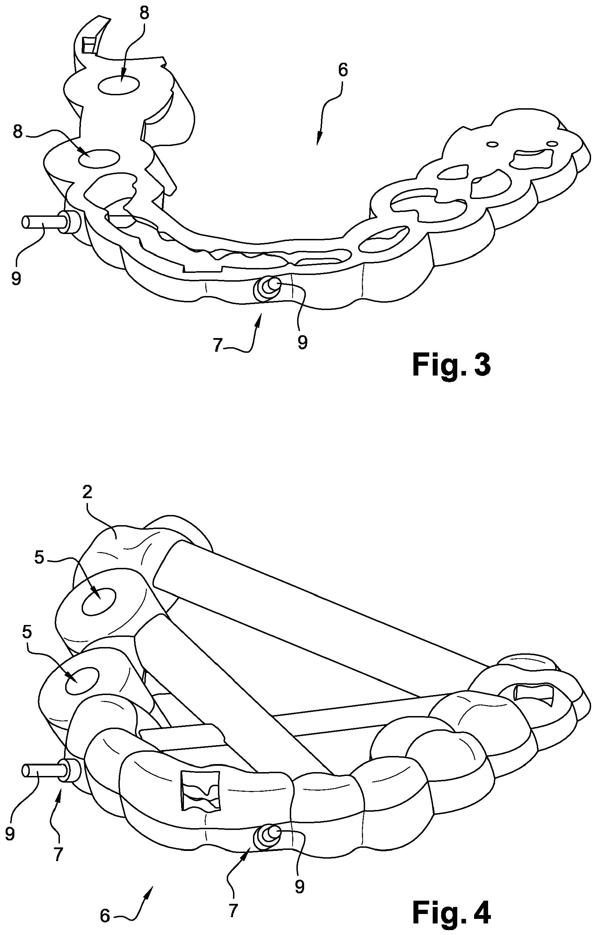

- la figure 3 est similaire à la figure 2 et illustre l'agencement de moyens pour fixer l'organe support dans la mâchoire d'un patient ;
- la figure 4 illustre en perspective l'assemblage entre une gouttière et l'organe support du dispositif selon l'invention.

### EXPOSE DETAILLE DE L'INVENTION

L'invention concerne un dispositif (1) d'aide pour un chirurgien à la mise en place d'implants dentaires. Le dispositif (1) permet notamment de guider des opérations de forage du maxillaire inférieur ou supérieur d'une mâchoire d'un patient, nécessaires à l'implantation des implants.

A cet effet, le dispositif (1) selon l'invention comprend un jeu de gouttières (2) présentées en grappe et reliées entre elles par des pattes de liaison (3) sécables, de préférence planes. Les pattes de liaison (3) comprennent par exemple chacune une extrémité reliée à une gouttière (2) qui présente une zone fragilisée en pointe pour faciliter le détachement des gouttières (2).

Chaque gouttière (2) peut être réalisée sur mesure pour un patient et présente ainsi une forme anatomique complémentaire à celle de la mâchoire du patient, et est destinée à reposer directement sur des dents et/ou une portion de gencive dudit patient. En pratique, si possible, l'appui de la gouttière (2) se fait sur les dents adjacentes à l'endentement.

Dans le cas d'un patient complètement édenté, l'appui direct des gouttières (2) sur la gencive manque de stabilité. Ainsi, dans ce cas, le dispositif comprend un organe support (6), de préférence conçu sur mesure et de forme anatomique complémentaire à celle de la mâchoire du patient. L'organe support (6) est destiné à être fixé sur la gencive du patient, par exemple par l'intermédiaire de clavettes (9) insérées dans des orifices (7). Chaque gouttière (2) comprend donc une forme complémentaire à celle de l'organe support (6) pour pouvoir reposer sur celui-ci d'une manière stable. L'organe support (6) et les gouttières (2) comprennent des moyens de fixation complémentaires, tels que par exemple des moyens mécaniques d'encliquetage, ou des moyens magnétiques tels que des aimants. L'organe support (6) est relié au jeu de gouttières (2) par l'intermédiaire d'au moins une patte de liaison (3) sécable.

Les gouttières (2), l'organe support (6) et les pattes de liaison (3) sont réalisées en matière plastique par une technique de fabrication additive, telle que par impression 3D.

La fabrication dite additive consiste à fabriquer, couche par couche, les gouttières (2), l'organe support (6) et les pattes de liaison (3). Plus précisément, la fabrication additive consiste à déposer sur une table une couche de poudre de plastique, de quelques centièmes de centimètres d'épaisseur, et de fusionner une section utile de cette couche au moyen d'un faisceau laser. La table descend ensuite de quelques centièmes de centimètres et une nouvelle couche de poudre est déposée puis une section utile de cette couche est fusionnée. Ainsi, la pièce est réalisée couche par couche, lesquelles couches sont fusionnées par un faisceau laser.

Cette technique de fabrication permet de réaliser un très grand nombre de dispositif (1) pour de nombreux patients, dans un volume de production réduit. Les dispositifs fabriqués sont également peu onéreux, à usage unique et jetables.

En fonction de l'opération chirurgicale à réaliser, chaque gouttière (2) comprend au moins un orifice de guidage (5) d'un organe de forage, lequel orifice (5) comporte un diamètre et une orientation définis. Les orifices (5) de mêmes diamètres sont tous ménagés sur une même gouttière (2) de sorte qu'un diamètre de forage correspond à une gouttière (2) particulière. Bien entendu, la forme de l'organe support (6) est adaptée pour ne pas obturer les orifices de guidage (5) des gouttières (2). L'organe support (6) comprend par exemple des évidements (8) agencés en regard desdits orifices de guidage (5).

En pratique, et lors de l'opération chirurgicale, le chirurgien détache la première gouttière (2) de la grappe de gouttières (2) et l'installe dans la bouche du patient. Dans le cas d'un édenté partiel, cette gouttière (2) peut être de forme anatomique et reposer directement de manière stable sur les dents restantes du patient. Dans le cas d'un édenté complet, le chirurgien installe en premier lieu l'organe support (6) dans la bouche du patient et le fixe de toute manière appropriée, par exemple par l'intermédiaire des clavettes (9). La première gouttière (2) est alors posée de manière stable sur l'organe support (6) et fixé à celui-ci par l'intermédiaire des moyens de fixation complémentaires. Cette gouttière (2) comprend un ou plusieurs orifices de guidage (5) de l'organe de forage du chirurgien. S'il y a plusieurs orifices (5), ceux-ci comprennent tous le même diamètre. Le chirurgien est ainsi en mesure de réaliser une première étape de forage.

Après avoir réalisé la première étape de forage avec un premier diamètre de forage, le chirurgien retire la première gouttière (2) et contrôle son ou ses forages. Il installe ensuite la seconde gouttière (2) du jeu de gouttières (2). Cette seconde gouttière (2) est identique à la gouttière (2) précédente à l'exception du fait que les diamètres de certains orifices (5) ont été augmentés en taille et de manière identique, et que certains orifices (5) ont été obturés. En effet, lors de l'opération chirurgicale, pour préparer la mâchoire à la réception des implants, le chirurgien réalise un forage de la mâchoire à l'endroit désiré en augmentant progressivement les diamètres de forage jusqu'à obtenir le diamètre nécessaire à l'implantation de l'implant correspondant.

Ainsi, si un orifice (5) est obturé, cela signifie que le diamètre du forage réalisé à l'étape de forage précédente est suffisant pour recevoir l'implant correspondant. Les risques d'erreurs du chirurgien sont évités. Avec la deuxième gouttière (2) en place, le chirurgien est en mesure de forer uniquement aux travers des orifices (5) présents, autorisant un diamètre de forage plus important.

Ainsi, le jeu de gouttières (2) comprend autant de gouttière (2) que de séries de forage de diamètres différents nécessaires à réaliser.

A chaque changement de diamètre, et donc de gouttières (2), le chirurgien est incité à contrôler les forages déjà réalisés.

Par ailleurs, le chirurgien n'utilise plus de dispositifs réducteurs de diamètres à superposer sur la gouttière (2) de sorte que l'encombrement du dispositif (1) selon l'invention est réduit, et les gênes envers le chirurgien et le patient sont minimisées.

Afin de faciliter l'opération chirurgicale et d'éviter toutes erreurs, les gouttières (2) sont reliées entre elles dans l'ordre chronologique dans lequel elles doivent être utilisées au cours de l'opération chirurgicale.

De plus, chaque gouttière (2) peut comprendre un numéro correspondant à son ordre d'utilisation lors de l'opération chirurgicale.

La traçabilité est aussi améliorée car il est dorénavant possible de suivre le dispositif (1) d'un patient dès sa fabrication jusqu'à son utilisation. En effet, la ou les pattes de liaison (3) comprennent avantageusement des inscriptions (4) permettant d'identifier les références du dispositif (1) et/ou du patient auquel il est destiné. Les inscriptions (4) peuvent présenter la forme de numéros ménagés en face de chaque gouttière (2) correspondant à son ordre chronologique d'utilisation lors de l'opération. Les pattes de liaison (3) sont de préférence planes pour faciliter l'inscription, et lesdites inscriptions (4) traversent de préférence l'épaisseur des pattes de liaison (3) pour en faciliter leur lecture.

Comme il ressort de ce qui précède, l'invention fournit un dispositif (1) d'aide à la mise en place d'implants dentaires, conçu sur mesure pour un patient complétement ou partiellement édenté, qui permet de faciliter et de guider les opérations de forage de la mâchoire d'un patient selon un axe défini, tout en présentant une stabilité optimale et encombrement minimum, en permettant d'éviter les risques d'erreurs de forage pour le chirurgien, et en permettant audit chirurgien de contrôler ses opérations de forage tout au long de l'opération chirurgicale.

## Revendications

1. Dispositif (1) d'aide à la mise en place d'implants dentaires, comprenant un jeu de gouttières (2), chaque gouttière (2) étant destinée à reposer directement ou indirectement sur au moins une dent et/ou au moins une portion de gencive dudit patient, chaque gouttière (2) comprenant au moins un orifice de guidage (5) d'un organe de forage, les orifices (5) comprenant des diamètres définis en fonction de l'opération chirurgicale à réaliser, les orifices (5) de mêmes diamètres sont tous ménagés sur une même gouttière (2) de sorte qu'un diamètre de forage correspond à une gouttière (2) particulière, ledit jeu de gouttières (2) comprenant autant de gouttières (2) que de diamètres de forage différents à réaliser lors de l'opération chirurgicale, le dispositif (1) comprenant un organe support (6) destiné à être fixé sur la gencive du patient, chaque gouttière comprenant une forme complémentaire à celle de l'organe support (6) pour pouvoir reposer sur celui-ci, l'organe support (6) et les gouttières (2) comprenant des moyens de fixation complémentaires, les gouttières (2) et l'organe support (6) étant réalisés en matière plastique **caractérisé en ce que** les gouttières et l'organe de support sont reliées entre eux par au moins une patte de liaison (3) sécable de manière à ce que le jeu de gouttières (2) et l'organe support (6) forment une grappe.

2. Dispositif (1) selon la revendication 1, ***caractérisé* en ce que** chaque gouttière (2) présente une forme anatomique complémentaire à celle de la mâchoire du patient de sorte à pouvoir reposer directement sur au moins une dent et/ou au moins une portion de gencive dudit patient.

3. Dispositif (1) selon la revendication 1, ***caractérisé* en ce que** les gouttières (2) sont reliées entre elles dans l'ordre chronologique dans lequel elles doivent être utilisées au cours de l'opération chirurgicale.

4. Dispositif (1) selon l'une quelconque des revendications 1 à 3, ***caractérisé* en ce que** chaque gouttière (2) comprend un numéro correspondant à son ordre d'utilisation lors de l'opération chirurgicale.

5. Dispositif (1) selon l'une quelconque des revendications 1 à 4, ***caractérisé* en ce que** la ou les pattes de liaison (3) sont planes et pourvues d'une inscription (4) identifiant l'ordre d'utilisation des gouttières (2) lors de l'opération chirurgicale et/ou le patient auquel le dispositif (1) est adapté.

6. Dispositif (1) selon l'une quelconque des revendications 1 à 5, ***caractérisé* en ce que** les pattes de liaison (3) sont reliées aux gouttières (2) et à l'organe support (6) de manière sécable par une zone fragilisée avec une extrémité en pointe.

7. Procédé de fabrication du dispositif (1) d'aide à la mise en place d'implants dentaires conforme à la revendication 1, ***caractérisé* en ce qu'**il consiste à fabriquer, en même temps et par fabrication additive couche par couche, l'organe support (6), les gouttières (2) constitutives du jeu de gouttières (2) ainsi que les pattes de liaison (3), liées de manière sécable auxdites gouttières (2) et à l'organe support (6), et reliant entre eux lesdites gouttières (2) et l'organe support (6).

## Patentansprüche

1. Vorrichtung (1) zur Unterstützung bei der Platzierung von Zahnimplantaten, umfassend einen Satz von Rinne (2), wobei jede Rinne (2) dazu bestimmt ist, direkt oder indirekt auf mindestens einem Zahn und/oder mindestens einem Teil des Zahnfleisches des Patienten aufzuliegen, wobei jede Rinne (2) mindestens eine Öffnung (5) zum Führen eines Bohrelements umfasst, die Öffnungen (5) Durchmesser umfassen, die gemäß dem durchzuführenden chirurgischen Eingriff definiert sind, wobei die Öffnungen (5) mit den gleichen Durchmessern alle auf derselben Rinne (2) angeordnet sind, so dass ein Bohrdurchmesser einer bestimmten Rinne (2) entspricht, wobei der Satz von Rinnen (2) so viele Rinnen (2) umfasst, wie verschiedene Bohrdurchmesser, die während des chirurgischen Eingriffs durchzuführen sind, wobei die Vorrichtung (1) ein Stützelement (6) umfasst, das dazu bestimmt ist, am Zahnfleisch des Patienten befestigt zu werden, wobei jedes Tablett eine Form umfasst, die zu der des Stützelements (6) komplementär ist, um darauf ruhen zu können, wobei das Stützelement (6) und die Rinnen (2) komplementäre Befestigungsmittel umfassen, die Rinnen (2) und das Stützelement (6) aus Kunststoff bestehen, **dadurch gekennzeichnet, dass** die Rinnen und das Stützelement durch mindestens eine lösbare Verbindungslasche (3) miteinander verbunden sind, so dass der Satz von Rinnen (2) und das Stützelement (6) ein Cluster bilden.

2. Vorrichtung (1) nach Anspruch 1, **dadurch gekennzeichnet, dass** jedes Rinne (2) eine anatomische Form aufweist, die zu der des Kiefers des Patienten komplementär ist, so dass es direkt auf mindestens einem Zahn und/oder mindestens einem Teil des Zahnfleisches des Patienten aufliegen kann.

3. Vorrichtung (1) nach Anspruch 1, **dadurch gekennzeichnet, dass** die Rinnen (2) in der chronologischen Reihenfolge, in der sie während des chirurgischen Eingriffs verwendet werden sollen, miteinander verbunden sind.

4. Vorrichtung (1) nach einem der Ansprüche 1 bis 3, **dadurch gekennzeichnet, dass** jede Rinne (2) eine ihrer Nutzungsreihenfolge während des chirurgischen Eingriffs entsprechende Zahl aufweist.

5. Vorrichtung (1) nach einem der Ansprüche 1 bis 4, **dadurch gekennzeichnet, dass** die Verbindungslaschen (3) flach sind und mit einer Inschrift (4) versehen sind, die die Reihenfolge der Verwendung die Rinnen (2) während des chirurgischen Eingriffs und/oder den Patienten, an den die Vorrichtung (1) angepasst ist, identifiziert.

6. Vorrichtung (1) nach einem der Ansprüche 1 bis 5, **dadurch gekennzeichnet, dass** die Verbindungslasche (3) mit den Rinnen (2) und das Stützelement (6) durch einen geschwächten Bereich mit einem spitzen Ende sicher verbunden sind.

7. Verfahren zur Herstellung der Vorrichtung (1) zur Unterstützung bei der Platzierung von Zahnimplantaten nach Anspruch 1, **dadurch gekennzeichnet, dass** es darin besteht, gleichzeitig und durch additive Herstellung Schicht für Schicht das Stützelement (6), die den Satz von Rinnen (2) bildenden Rinnen (2) sowie die Verbindungslaschen (3) herzustellen, die mit den Rinnen (2) und das Stützelement (6) sicher verbunden sind, und zwischen ihnen die Rinnen (2) und das Stützelement (6) zu verbinden.

## Claims

1. Device (1) for assisting in the placement of dental implants, comprising a set of gutters (2), each gutter (2) being intended to rest directly or indirectly on at least one tooth and/or at least a portion of gum of said patient, each gutter (2) comprising at least one guide hole (5) for a drilling member, the orifices (5) comprising diameters defined according to the surgical operation to be carried out, the orifices (5) of the same diameters are all arranged on the same gutter (2) so that a drilling diameter corresponds to a particular gutter (2), said set of gutters (2) comprising as many gutters (2) as different drilling diameters to be carried out during the surgical operation, the device (1) comprising a support member (6) intended to be fixed on the patient's gum, each gutter comprising a shape complementary to that of the support member (6) to be able to rest on it, the support member (6) and the gutters (2) comprising complementary fixing means, the gutters (2) and the support member (6) being made of plastic material, **characterized in that** the gutters and the support member are connected together by at least one separable connecting tab (3) so that the set of gutters (2) and the support member (6) form a cluster

2. Device (1) according to claim 1, **characterized in that** each gutter (2) has an anatomical shape complementary to that of the patient's jaw so that it can rest directly on at least one tooth and/or at least a portion of the gum of said patient.

3. Device (1) according to claim 1, **characterized in that** the gutters (2) are connected to each other in the chronological order in which they are to be used during the surgical operation.

4. Device (1) according to any of claims 1 to 3, **characterized in that** each gutter (2) comprises a number corresponding to its order of use during the surgical operation.

5. Device (1) according to any of claims 1 to 4, **characterized in that** the connecting tabs (3) are flat and provided with an inscription (4) identifying the order of use of the gutters (2) during the surgical operation and/or the patient to whom the device (1) is adapted.

6. Device (1) according to any one of claims 1 to 5, **characterized in that** the connecting tabs (3) are connected to the gutters (2) and the support member (6) in a securable manner by a weakened area with a pointed end.

7. Method for manufacturing the device (1) for assisting in the placement of dental implants according to claim 1, **characterized in that** it consists in manufacturing, at the same time and by additive manufacturing layer by layer, the support member (6), the gutters (2) constituting the set of gutters (2) as well as the connecting tabs (3), connected in a securable manner to said gutters (2) and to the support member (6), and connecting between them said gutters (2) and the support member (6)
